# EUROPÄISCHE PATENTSCHRIFT

(11) **EP 0 861 165 B1**
(45) Veröffentlichungstag und Bekanntmachung des Hinweises auf die Patenterteilung: **01.09.1999**
(21) Anmeldenummer: 96940653.7
(22) Anmeldetag: 27.11.1996
(51) Int. Cl.: B60N 2/34

(54) **KLAPPSITZBANK**
FOLDING BENCH SEAT
BANQUETTE RABATTABLE

(30) Priorität: 27.11.1995 DE 19544014
(43) Veröffentlichungstag der Anmeldung: 02.09.1998
(73) Patentinhaber: AGUTI PRODUKTENTWICKLUNG & DESIGN GMBH, 88079 Kressbronn (DE)
(72) Erfinder: GRIEGER, Andreas, D-88079 Kressbronn (DE)
(74) Vertreter: Fiener, Josef
(86) Internationale Anmeldenummer: EP9605239
(87) Internationale Veröffentlichungsnummer: WO9719830

(56) Entgegenhaltungen:
- EP-A- 0 472 955
- EP-A- 0 566 501
- US-A- 4 620 335

## Beschreibung

Die Erfindung betrifft eine Klappsitzbank für Fahrzeuge, insbesondere für Wohnmobile, bestehend aus einem Sitzbankgestell das ein am Bodenbereich befestigtes Grundgestell und einen Gestellaufbau umfaßt, wobei der Gestellaufbau einen aufrechten Säulenaufbau, einen Lehnenaufbau und einen Sitzflächenaufbau aufweist.

Derartige Klappsitzbänke gemäß den oberbegrifflichen Merkmalen des Anspruches 1 sollen eine bequeme Sitsgelegenheit für Reisende bieten und bei Übernachtung oder Pausen in eine Position klappbar sein, die eine möglicht breite und komfortable Liegefläche für mindestens eine Person bildet, wie dies aus der EP-A-0 566 501 bekannt ist. Daneben sollen diese Klappsitzbänke aber auch den gestiegenen Sicherheitserfordernissen moderner Wohnmobile Rechnung tragen. So wird das herkömmliche Zwei-Punkt-Rückhaltesystem mehr und mehr vom Drei-Punkt-Gurtsystem verdrängt, das im Falle eines Unfalles die Insassen deutlich besser schützt. Der Einbau von Drei-Punkt-Rückhaltesystemen setzt das Vorhandensein eines stabilen Aufbaus voraus, der aber in Wohnmobilen oftmals nicht vorhanden ist. Deshalb wird in der Regel eine aufrechte Säule an der Sitzlehne angeordnet, die am Boden-/Rahmenbereich des Fahrzeuges befestigt ist und eine ausreichende Stabilität für das Anbringen von oberen Anlenkpunkten für Drei-Punkt-Rückhaltesysteme gewährleistet.

Die DE-U-93 14 859 (= DE-A-43 33 420) beschreibt ebenfalls eine Klappsitzbank für Wohnmobile. Diese Klappsitzbank besteht im wesentlichen aus einer Rahmenkonstruktion, in die ein Gurtbock integriert ist, einer aufrechten Säule, an der ein oberer Anlenkpunkt eines Drei-Punkt-Rückhaltesystems angeordnet ist, einer Rückenlehne und einer Sitzfläche. Die aufrechte Säule wird in eine komplementäre Ausnehmung im Gurtbock eingesetzt und aufrecht stehend befestigt. Das Rückhaltesystem wird dabei vom Gurtbock ausgehend durch die als Hohlkammerprofil ausgebildete Säule zum oberen Anlenkpunkt der aufrechten Säule nach oben geführt. Ferner sind die Rückenlehne und die Sitzfläche klappbar an der Rahmenkonstruktion fixiert, so daß diese im ausgeklappten Zustand zusammen mit einer im Aufbau ähnlichen Klappsitzbank eine größere Liegefläche ausbilden.

Ein wesentlicher Nachteil dieses Klappsitzbankaufbaus ist aber, daß er für sich alleine gesehen keine Liegefläche ausbildet, die lang und groß genug ist, um als Schlafstätte für mehrere Personen zu dienen, so daß stets ein Zusammenwirken mit einer ähnlichen Sitzbankanordnung erforderlich ist. Ein weiterer wesentlicher Nachteil dieser Säulenanordnung besteht darin, daß die auftretenden Gurtkräfte im Falle eines Unfalls alleine von der aufrechten Säule aufgenommen wird, die dabei stark auf Biegung beansprucht wird. Deshalb treten unter der Einwirkung des aus dieser Art der Krafteinleitung resultierenden Biegemomentes erhebliche Spannungsspitzen am Verankerungspunkt der Säule im Gestell auf. Dies gilt auch für klappbar gelagerte Sitzbank-Säulen gemäß der DE-A-44 42 813, da hierbei die Säule aufgrund ihrer Länge im Crashfalle starken Biegebelastungen ausgesetzt ist. Zudem benötigt diese Konstruktion zum Umklappen einen erheblichen Platzbedarf, der jedoch bei Wohnmobilen häufig durch Einbauten an der Rückseite der Klappsitzbank verstellt ist. Dies kann zu erheblichen Einschränkungen bei der Ausnutzung der Wohn- bzw. Liegefläche bzw. zu einem Verletzungsrisiko an der relativ scharfkantigen Säule führen.

Demzufolge liegt der Erfindung die Aufgabe zugrunde, eine Klappsitzbank für Fahrzeuge, insbesondere Wohnmobile zu schaffen, die im Falle eines Unfalls eine günstigere Krafteinleitung ermöglicht, einfach zu handhaben ist und im ausgeklappten Zustand eine ausreichend große Liegefläche für wenigstens eine Person bildet.

Diese Aufgabe wird gelöst durch eine Klappsitzbank mit den Merkmalen des Patentanspruches 1.

Demgemäß ist ein Gestellaufbau mittels eines horizontal ausgerichteten Schwenkgelenkes klappbar an einem Grundgestell angeordnet, wobei der Gestellaufbau aus einem Säulenaufbau, einem Lehnenaufbau und einem Sitzflächenaufbau besteht, die ebenfalls mittels horizontal ausgerichteter Schwenkgelenke miteinander gekoppelt sind, so daß die Krafteinleitung im Falle eines Unfalles über eine in Seitenansicht dreiecksförmige Anordnung aus einem Säulenrahmen und einem Lehnenrahmen in das Grundgestell und von dort in den Boden erfolgt. Dabei stützt sich der als Druckstrebe wirkende Lehnenrahmen in bevorzugter Weise an einem Vorsprung des Grundgestells formschlüssig ab. Diese Form der Krafteinleitung macht den Säulenrahmen zur Zugstrebe, den Lehnenrahmen zur Druckstrebe und beseitigt dadurch im wesentlichen die Voraussetzungen für das Auftreten eines Biegemomentes, wodurch die Spannungsspitzen an der Verbindungsstelle zwischen Säule und Gestell erheblich verringert werden. Dadurch können diese tragenden Teile relativ schlank ausgebildet sein.

Des weiteren kann der Säulenaufbau aufgrund seiner klappbaren Anordnung am Grundgestell zusammen mit dem Lehnenaufbau und dem Sitzflächenaufbau aus seiner aufrechten Position mit einer Ausklappbewegung rasch und einfach in eine liegende Position gebracht werden, wobei das Säulenteil selbst zum Bestandteil der gepolsterten Liegefläche wird und damit keine Verletzungsquelle mehr darstellt. In dieser liegenden Position, d. h. im ausgeklappten Zustand des Säulenaufbaus, bildet die Klappsitzbank eine Liegefläche aus, die groß genug ist, um als Schlafstätte für mehrere Personen zu dienen, da gegenüber dem Stand der Technik der ca. 70 Zentimeter hohe Säulenteil zur Liegeflächenlänge hinzukommt.

Vorteilhafte Ausgestaltungen sind Gegenstand der Unteransprüche, wobei auch der gesamte Gestellaufbau entlang des ersten Schwenkgelenkes relativ zum Grundgestell seitlich verschiebbar sein kann, um eine zusätzliche Vergrößerung der Liegefläche zu ermöglichen. Der Säulenaufbau, der Lehnenaufbau und der Sitzflächenaufbau sind dabei aus je einem Polsterteil und einem Rahmenteil aufgebaut. Das Grundgestell kann zudem mit einer Abstützeinrichtung ausgestattet sein, die die Klappsitzbank in deren liegender Position zusätzlich abstützt.

Ferner weist das Grundgestell bevorzugt an einem oberen Träger eine Ausnehmung auf, in der sich der Gestellaufbau an einem Vorsprung verrastbar und formschlüssig abstützt. Des weiteren ist am Zugsäulenrahmen des Säulenaufbaus ein oberer Anlenkpunkt für ein Drei-Punkt-Rückhaltesystem angeordnet, wobei die Gurte des Rückhaltesystems beispielsweise am oder im als Hohlprofil ausgebildeten Zugsäulenrahmen verlaufen können. Ebenso wie der Zugsäulenrahmen können auch der Lehnenrahmen und der Sitzflächenrahmen als Hohlprofil ausgebildet werden, beispielsweise als Aluminiumstrangpreßprofil. Das Hohlprofil kann dabei ein U-Profil, ein rechteckiges Vierkantrohr usw. sein.

Ein weiterer Vorteil der Erfindung ist deren kompakte Bauweise. Durch das Abklappen des Säulenteils wird das erforderliche Stauraumvolumen reduziert, was vor allem beim Transport mit Speditionsfahrzeugen bei der Produktion oder der Lagerhaltung von großem Nutzen ist, da dadurch die Kosten zu reduzieren sind.

Nachfolgend wird die Erfindung anhand der Zeichnungen näher erläutert und beschrieben. Es zeigen:
- Fig. 1: eine schematische Seitenansicht einer Klappsitzbank in Sitzposition;
- Fig. 2: eine schematische Draufsicht auf einen ausgeklappten Grundgestell-Rahmenaufbau der Klappsitzbank gemäß Fig. 1, jedoch ohne Bepolsterung;
- Fig. 3: eine schematische Vorderansicht der Klappsitzbank gemäß Fig. 2 in Sitzposition;
- Fig. 4: eine schematische Seitenansicht der Klappsitzbank in liegender Position;
- Fig. 5a,b: schematische Vorderansichten der entlang eines Schwenkgelenkes verschiebbaren Klappsitzbank in liegender Position; und
- Fig. 6a,b: abgewandelte Ausführungsbeispiele eines klappbaren Säulenrahmens.

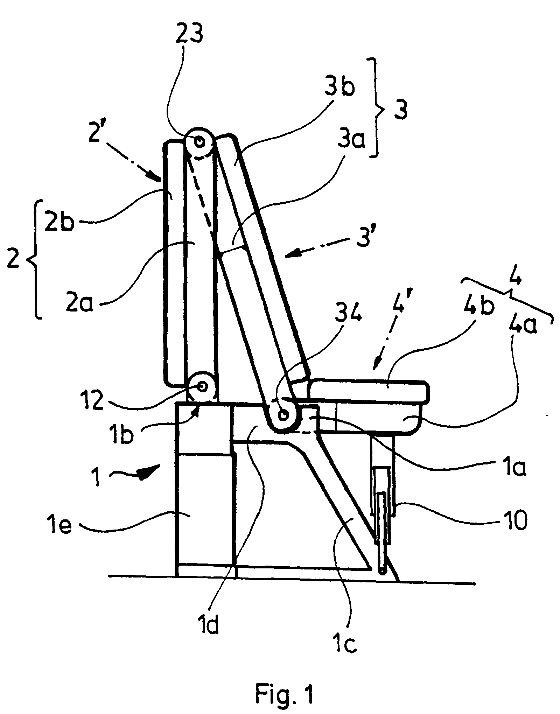

In Fig. 1 ist eine schematische Seitenansicht einer Klappsitzbank in Sitzposition dargestellt, die aus einem Grundgestell 1 und einem Gestellaufbau 2, 3, 4 besteht. Das Grundgestell 1 ist am Boden bzw. Rahmen des Fahrzeuges befestigt, insbesondere verschraubt oder mit Schnellverschlüssen gehaltert. Der Gestellaufbau setzt sich aus einem Säulenaufbau 2, der aus einem Zugsäulenrahmen 2a mit dazu passendem Polsterteil 2b aufgebaut ist, einem Lehnenaufbau 3, der aus einem Lehnenrahmen 3a mit dazu passendem Polsterteil 3b aufgebaut ist, und einem Sitzflächenaufbau 4 zusammen, der aus einem Sitzflächenrahmen 4a mit dazu passendem Polsterteil 4b aufgebaut ist. In der in Fig. 1 dargestellten Anordnung weisen der Säulenaufbau 2, der Lehnenaufbau 3 und der Sitzflächenaufbau 4 die jeweiligen Sitzpositionen 2', 3' und 4' auf. Der Zugsäulenrahmen 2a ist dabei mittels eines horizontal ausgerichteten Schwenkgelenkes 12 klappbar an einem Querträger bzw. einer Konsole 1b im oberen Bereich des Grundgestells 1 angeordnet. Entsprechend ist auch der Lehnenrahmen 3a mittels eines horizontal ausgerichteten Schwenkgelenkes 23 klappbar an dem oberen Endbereich des Zugsäulenrahmen 2a und der Sitzflächenrahmen 4a mittels eines horizontal ausgerichteten Schwenkgelenkes 34 klappbar an dem unteren Ende des Lehnenrahmens 3a angeordnet. Um den Gestellaufbau 2, 3, 4 im Falle eines Unfalles in seiner Sitzposition 2', 3', 4' zu halten, ist an einem oberen Träger 1d des Grundgestells 1 durch eine Ausnehmung ein Vorsprung 1a ausgebildet, an dem sich der Sitzlehnenrahmen 3a verrastbar und formschlüssig abstützt. Dabei ist die Anordnung dieses Vorsprunges 1a nicht nur auf die hier dargestellte, rastnutenartige Ausführungsform oberhalb eines Stützfußes 1c des Grundgestelles 1 beschränkt. Es ist auch ein hier nicht dargestellter, am Grundgestell 1 angebrachter zusätzlicher Querträger denkbar, der auf seiner Oberseite in Längsrichtung wenigstens einen Vorsprung ausbildet, der in entsprechende Ausnehmungen zwischen dem Lehnenrahmen 3a und dem Sitzlehnenrahmen 4a formschlüssig eingreift und dabei den unteren Bereich des Lehnenrahmens 3a gegen Verrutschen abstützt.

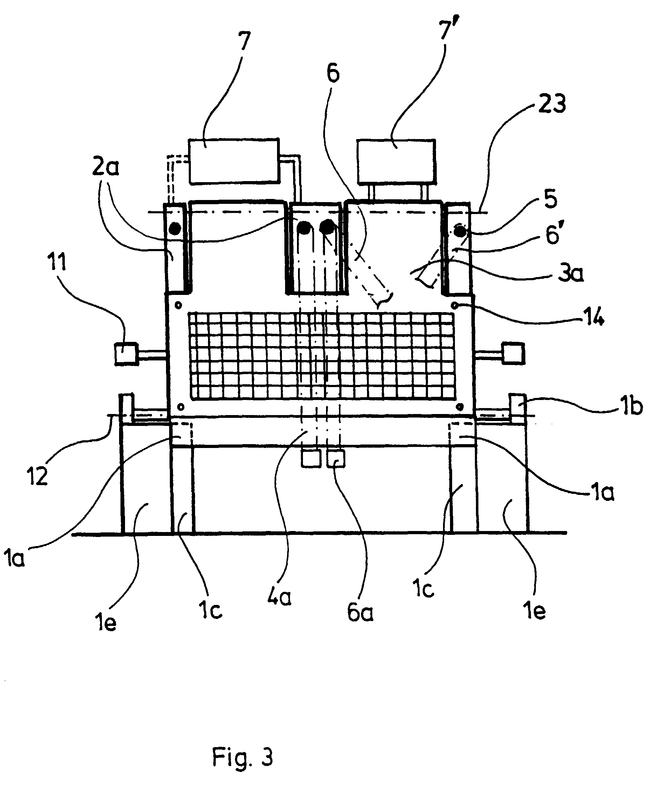

In jeweiliger Verlängerung des Verlaufs des Zugsäulenrahmens 2a bzw. des Lehnenrahmens 3a nach unten hin stützen sich Verstrebungen bzw. Stützfüße 1e bzw. 1c des Grundgestells 1 am Bodenbereich ab. Im Falle eines Unfalles kann somit die Krafteinleitung über den als Zugstrebe fungierenden Zugsäulenrahmen 2a und den als Druckstrebe fungierenden Lehnenrahmen 3a in die Stützfüße 1e, 1c des Grundgestells 1 und von dort in den Boden bzw. Fahrzeugrahmen erfolgen, was zu einer erheblichen Reduzierung der an der Klappsitzbank auftretenden Materialspannungen, insbesondere der Vermeidung von Biegemomenten, führt. Hierdurch wird die Stabilität der Klappsitzbank und die Sicherheit der Insassen wesentlich erhöht. Wie dies insbesondere aus der Fig. 3 hervorgeht, weist ein Grundgestell 1 seitlich wenigstens zwei dieser Stützfüße 1c, 1e und Vorsprünge 1a auf. Der Stützfuß 1e kann aber auch als durchgehendes Trägerteil ausgebildet sein.

Des weiteren ist am Grundgestell 1 eine Abstützeinrichtung 10 vorgesehen, die am unteren Ende des Stützfußes 1c des Grundgestelles 1 klappbar angelenkt ist und in der Sitzposition den Sitzflächenaufbau 4 von unten her abstützt. Dabei kann das Abstützelement 10 teleskopierbar aufgebaut sein, wie dies in Fig. 1 dargestellt ist, oder aber auch aus wenigstens zwei gelenkig miteinander verbundenen Elementen aufgebaut sein (nicht dargestellt). Denkbar wäre auch die Anordnung von zwei Abstützelementen an den Stützfüßen 1c des Grundgestelles 1, um in einer liegenden Position des Gestellaufbaus 2, 3, 4 sowohl den Lehnenaufbau 3 als auch den Sitzflächenaufbau 4 abzustützen. Ferner ist die Anordnung von zusätzlichen Abstützelementen nicht auf das untere Ende des Stützfußes 1c beschränkt, sondern kann überall an dem Grundgestell 1 erfolgen, beispielsweise am Stützfuß 1e oder mittig am Stützfuß 1c. Das Abstützelement 10 kann dabei auch durch einen üblichen Sitzbankkasten gebildet sein, bei dem das Grundgestell 1 an seiner Außenseite ringsum mit einer Verkleidung versehen ist und somit als truhenartiger Stauraum dienen kann.

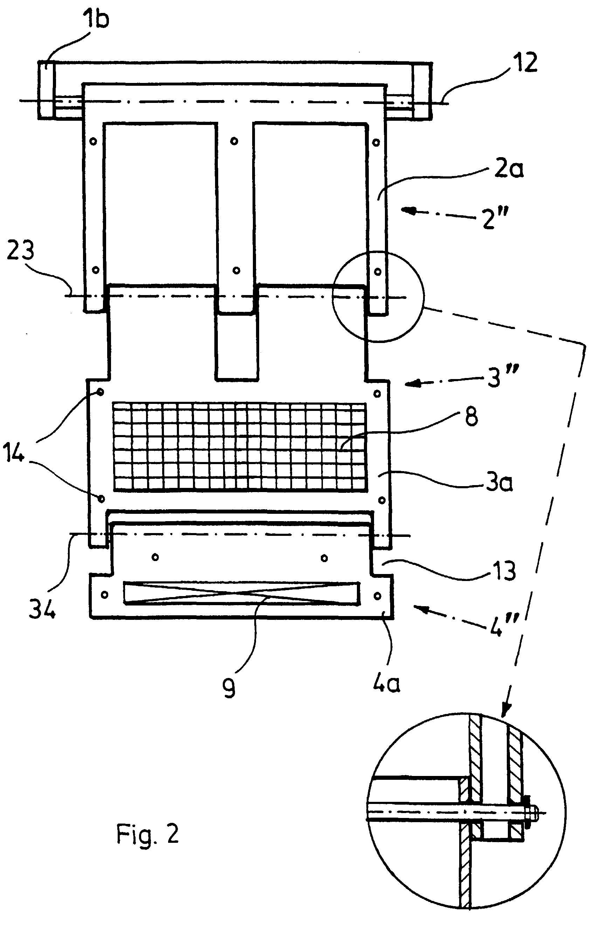

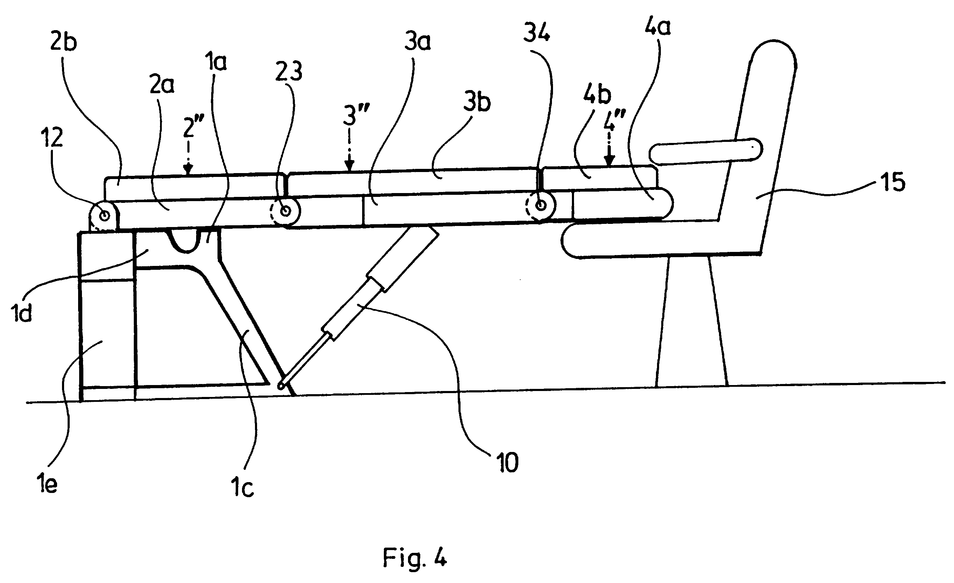

Fig. 2 zeigt eine schematische Draufsicht auf die Rahmenteile 2a, 3a, 4a des Gestellaufbaus der Klappsitzbank in liegender Position 2'', 3'', 4''. Der Zugsäulenrahmen 2a ist dabei M-förmig ausgebildet und besteht vorzugsweise aus einem geschweißten Aluminium-Hohlkammerprofil. Ein Ende des Zugsäulenrahmens 2a ist mittels des horizontal ausgerichteten Schwenkgelenkes 12 in der hier lediglich schematisch angedeuteten Konsole 1b des Grundgestells 1 gelagert, während das andere, in Sitzposition obere Ende des Zugsäulenrahmens 2a mittels des horizontal ausgerichteten Schwenkgelenkes 23 mit einem Ende des Lehnenrahmens 3a gekoppelt ist, so daß zur Verschwenkung genügend Freiraum zwischen dem Zugsäulenrahmen 2a und dem Lehnenrahmen 3a bleibt. Dadurch ist gewährleistet, daß aus der Liegeposition (vgl. Fig. 4) heraus nach dem Schwenken des Zugsäulenrahmens 2a und des Lehnenrahmens 3a um die Schwenkachse ihrer Schwenkgelenke 12 und 23 die aufrechte Sitzposition 2', 3' erhalten wird. Der Sitzflächenrahmen 4a ist auf die gleiche Weise in dem Lehnenrahmen 3a gelagert wie der Lehnenrahmen 3a in dem Zugsäulenrahmen 2a, d. h. mittels eines Schwenkgelenkes 34. Die Schwenkgelenkverbindungen 12, 23 und 34 können dabei als herkömmliche Gelenkbolzenverbindungen aufgebaut sein, bei der ein Achsbolzen die beiden Bauteile gelenkig miteinander verbindet. Dies ist aus der Detaildarstellung in Fig. 2, unten, ersichtlich, wobei der Achsbolzen durch z.B. Sicherungsringe gesichert sein kann oder auch weitere Rastelemente zur Arretierung der jeweiligen Schwenkgelenke aufweisen kann. Die klappbare Verbindung der Bauteile kann aber auch durch jegliche andere Art von schwenkbarer Kopplung zweier Bauteile ausgebildet sein.

In der Darstellung der Fig. 2 sind ferner an der linken und rechten Außenseite Aussparungen 13 zwischen dem Lehnenrahmen 3a und dem Sitzflächenrahmen 4a vorgesehen, in die die Vorsprünge 1a des Grundgestells 1 zur Abstützung des Lehnenrahmens 3a eingreifen, wenn dieser in Sitzposition 3' gemäß Fig. 1 gebracht ist. Der Lehnenrahmen 3a und der Sitzflächenrahmen 4a sind z. B. als Aluminium-Hohlkammerprofil ausgebildet und können aus Gründen der Materialersparnis oder der Gewichtsreduzierung Aussparungen aufweisen, die mit einer netzartigen Auskleidung 8 bzw. mit Diagonalstreben 9 ausgekleidet sind, um eine zusätzliche Abstützung für die Polsterteile 3b, 4b zu erhalten. Aus den gleichen Gründen ist auch eine Auskleidung der Freiräume zwischen den Fingern des M-förmigen Zugsäulenrahmens 2a möglich, was aber hier nicht dargestellt ist. Für die Auskleidung sind selbstverständlich auch weitere, dem Fachmann wohlbekannte Bespannungs- oder Bepolsterungsformen verwendbar.

Die Polsterteile 2b, 3b und 4b können steckbar mit den zugeordneten Rahmen 2a, 3a und 4a verbunden sein bzw. in diese einrasten, weshalb die Rahmen 2a, 3a, 4a Aufnahmelöcher 14 für komplementäre Steckverbindungen an den Polsterunterseiten aufweisen. Selbstverständlich können die Polster 2b, 3b, 4b auch auf andere Weise auf den Rahmen 2a, 3a, 4a fixiert werden, so z.B. mittels Klettverschlüssen oder auch einstückig an den Rahmenteilen aufgeschäumt sein. Ein Vorteil einer steckbaren Verbindung ist jedoch, daß die Polster arretiert und dennoch zum Reinigen oder Austausch abgenommen werden können. Es ist auch denkbar, diese Fixierung der Polsterteile 2b, 3b, 4b mit seitlichen Abstützschienen an dem Rahmenteilen 2a, 3a, 4a zu erreichen, so daß die Bepolsterung nur aufgelegt wird.

Fig. 3 zeigt eine schematische Vorderansicht eines Rahmenaufbaus 2a, 3a, 4a einer Klappsitzbank in Sitzposition 2', 3', 4'. Dort sind obere Anlenkpunkte 5 für die Schultergurte vorzugsweise an dem Zugsäulenrahmen 2a angebracht. Die Anbringung der oberen Um- bzw. Anlenkpunkte 5 kann dabei entweder am mittleren Teil oder an den äußeren Teilen des Zugsäulenrahmens 2a erfolgen. Befinden sich die oberen Anlenkpunkte 5 des Rückhaltesystems 6 am mittleren Teil des Zugsäulenrahmens 2a, so verläuft der Gurt nach außen zu unteren Anlenkpunkten bzw. Gurtschlössern (nicht dargestellt) am Grundgestell 1. Wenn sich die oberen Anlenkpunkte 5 des Rückhaltesystems 6 an den äußeren Teilen des Zugsäulenrahmens 2a befinden, verläuft der Gurt 6' jeweils nach innen zu unteren, mittigen Anlenkpunkten (nicht dargestellt) am Grundgestell 1, wie dies aus der strichpunktierten Darstellung der Gurtverläufe in Fig. 3 hervorgeht. Aufgrund der stabilen Konstruktion des Lehnenrahmens 3a als Druckstrebe ist auch eine obere Anlenkung des Drei-Punkt-Rückhaltesystems 6 an dem oberen Ende des Lehnenrahmens 3a möglich, was aber hier aus Gründen der Übersichtlichkeit nicht dargestellt ist. Das Gurt- bzw. Rückhaltesystem 6 ist vorzugsweise am oder im Säulenaufbau 2 geführt und umfaßt Gurtrollen 6a, die bevorzugt am hinteren Teil des Grundgestells 1 an dessen Querträger oder Konsole 1b angeordnet sind.

Des weiteren sind in der Fig. 3 Kopfstützen 7, 7' dargestellt, die entweder am Säulenrahmen 2a oder am Lehnenrahmen 3a angeordnet sein können. In der vorliegenden Darstellung ist hierbei die Kopfstütze 7 mittels wenigstens eines beispielsweise rohrförmig auskragenden Steckverbindungsaufbaus in den Zugsäulenrahmen 2a einsetzbar. Die Kopfstütze 7' zeigt eine andere Ausführungsform, die auf ähnliche Weise steckbar in den Lehnenrahmen 3a einsetzbar ist. Selbstverständlich können die Kopfstützen auch auf andere, dem Fachmann wohl bekannte Weise an dem Zugsäulenrahmen 2a bzw. dem Lehnenrahmen 3a angebracht werden. Ferner sind an den Seitenflächen des Lehnenrahmens 3a Armlehnen 11 schematisch angedeutet, die so angeordnet sein können, daß sie der seitlichen Abstützung des Polsterteils 3b dienen.

Fig. 4 zeigt eine schematische Seitenansicht der Klappsitzbank in liegender Position 2'', 3'', 4''. Dabei kann beispielsweise ein Dreh-Sitz 15 als vordere Auflage für den Sitzflächenaufbau 4 dienen und der Lehnenaufbau 3 von der Abstützeinrichtung 10 abgestützt werden. In einer vorteilhaften Weise ist dabei das Schwenkgelenk 12 so in der Konsole 1b des Grundgestells 1 gelagert, daß der Säulenaufbau 2 nach dem Verschwenken um die Schwenkachse des Schwenkgelenkes 12 auf dem Träger 1d des Grundgestelles 1 aufliegt. Wie bereits zuvor angedeutet kann durch das Anbringen einer weiteren Abstützeinrichtung in Form eines Sitzbankkastens der gesamte Aufbau derart abgestützt werden, daß dieser auch den Lehnenaufbau 3 unterstützt und der Sitzflächenaufbau 4 durch Arretierung der Schwenkachse 34 drehstarr verriegelt wird, womit auf den Sitz 15 als Abstützelement verzichtet werden kann.

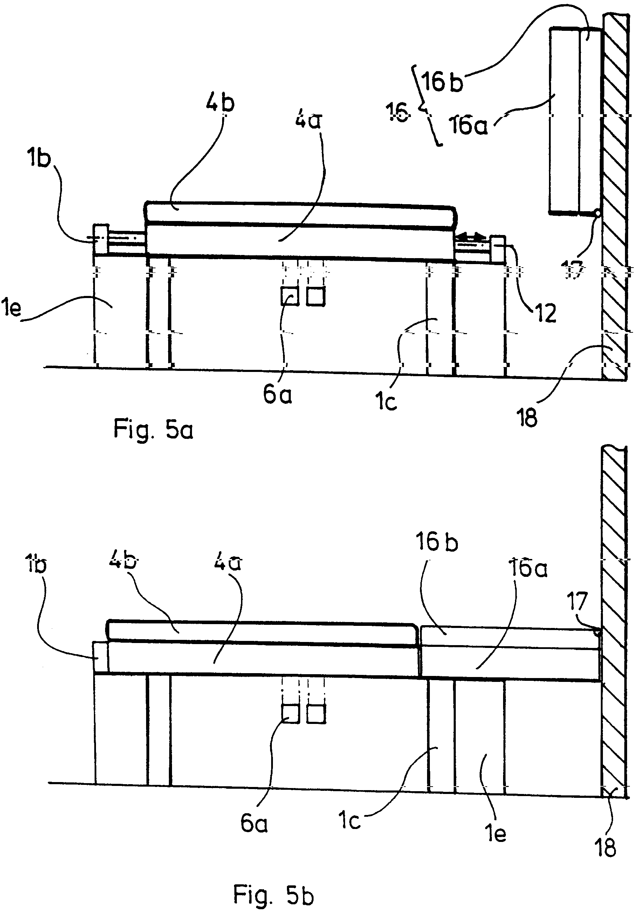

Fig. 5a zeigt eine schematische Vorderansicht einer Klappsitzbank entsprechend Fig. 4 in liegender Position 2'', 3'', 4'' mit einem Gestellaufbau 2, 3, 4, der entlang der Achse des Schwenkgelenkes 12 relativ zum Grundgestell 1 verschiebbar ist (vgl. die beiden Pfeile in Fig. 5a). Des weiteren zeigt Fig. 5a einen an der Wohnmobilseitenwand 18 angeordneten abklappbaren, weiteren Sitzmöbelaufbau 16, der aus einem Rahmen 16a und einem Polsterteil 16b aufgebaut ist. Der Sitzmöbelaufbau 16 kann beispielsweise mittels eines Scharniergelenkes 17 an der Wohnmobilseitenwand 18 auf herkömmliche Weise angelenkt sein. Wird nun der Gestellaufbau 2, 3, 4 entlang des Schwenkgelenkes 12 relativ zum Grundgestell 1 aus seiner in Fig. 5a dargestellten Ausgangsposition nach links, d.h. bis zum linken Anschlag an der Konsole 1b verschoben und dann der Sitzmöbelaufbau 16 nach unten geklappt, so daß dieser auf dem Grundgestell 1 aufliegt, wie dies in Fig. 5b dargestellt ist, so erhält man eine vergrößerte Liegefläche. Selbstverständlich kann der Sitzmöbelaufbau 16 auch noch durch eine zusätzliche Abstützeinrichtung abgestützt werden, bzw. auch in anderer Ausführungsform mit der Liegefläche des Gestellaufbaus 2, 3, 4 zusammenwirken, beispielsweise steckbar mit dem Gestellaufbau 2, 3, 4 verbunden sein. Es sei darauf hingewiesen, daß für diese seitliche Verschiebung das Grundgestell 1 auch gleich breit oder schmäler als der Gestellaufbau 2, 3 und 4 sein kann.

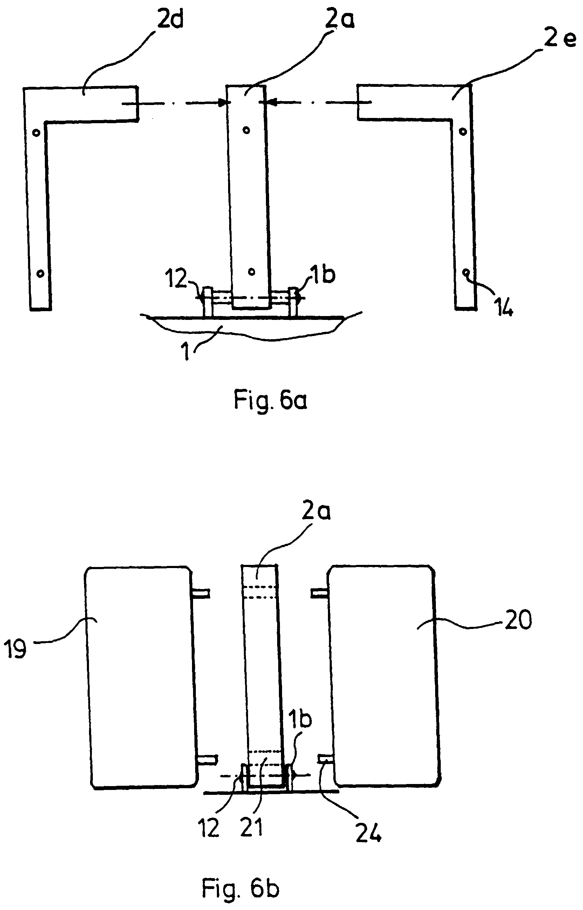

Fig. 6 zeigt eine modifizierte Ausführungsform des Zugsäulenrahmens 2a, der im Unterschied zur bisherigen, einteiligen Ausführungsform mehrteilig ausgebildet ist. So kann der Zugsäulenrahmen im wesentlichen aus einem zentralen Säulenteil 2a, einem linken Säulenteil 2d und einem rechten Säulenteil 2e aufgebaut sein, wobei diese einzelnen Teile je nach geforderter Sitzbankbreite beliebig miteinander kombinierbar bzw. lösbar miteinander verbindbar sein können. Hier ist beispielsweise eine Ausführung als Steckverbindung bzw. als Schraubverbindung denkbar. Diese Erweiterungsteile 2d, 2e können dabei relativ leichtbauend ausgebildet sein, da es für die Stabilität des Aufbaus und für die Krafteinleitung im Crashfalle ausreichend ist, wenn der in Seitenansicht (Fig. 1) dreiecksförmige Säulenaufbau lediglich aus dem schlank ausgebildeten, zentralen Zug-Säulenteil 2a und dem Lehnenrahmen 3a aufgebaut ist. Somit kann auch die Anordnung von Polsterteilen 19 bzw. 20 an der rechten und linken Seite des zentralen Säulenteils 2a vorgesehen sein. Die Anbringung der Polsterteile 19, 20 an dem zentralen Säulenteil 2a kann mittels einer Steckverbindung erfolgen, bei der einrastbare Vorsprünge 24 in komplementäre Aussparungen 21 des zentralen Säulenteils 2a eingreifen. Die dem Polsterteil 2b entsprechenden Polsterteile 19, 20 sind hierbei im Crashfalle keine (oder nur gering) tragenden Teile, sondern nur in Liegeposition gemäß Fig. 4. Bei dieser Bauweise mit relativ schlankem Säulenteil 2a kann die Konsole 1b zur Bildung der Schwenkachse 12 ebenfalls relativ schmal gewählt werden, wie dies aus Fig. 6a und 6b ersichtlich ist.

## Patentansprüche

1. Klappsitzbank für Fahrzeuge, insbesondere für Wohnmobile, bestehend aus einem Sitzbankgestell, das ein am Bodenbereich befestigtes Grundgestell (1) und einen Gestellaufbau (2, 3, 4) umfaßt, wobei der Gestellaufbau (2, 3, 4) einen aufrechten Säulenaufbau (2), einen Lehnenaufbau (3) und einen Sitzflächenaufbau (4) aufweist, wobei der Säulenaufbau (2) mittels eines unteren, horizontal ausgerichteten Schwenkgelenkes (12) an dem Grundgestell (1) gelagert und von der aufrechten Position (2') in eine liegende Position (2'') klappbar angeordnet ist,
dadurch gekennzeichnet, daß
der Lehnenaufbau (3) mittels eines oberen, horizontal ausgerichteten Schwenkgelenkes (23) klappbar an dem Säulenaufbau (2) angeordnet ist, und an dem Säulenaufbau (2) ein oberer Um- oder Anlenkpunkt (5) eines Drei-Punkt-Rückhaltesystems (6) angeordnet ist.

2. Klappsitzbank nach Anspruch 1,
dadurch gekennzeichnet, daß
das Rückhaltesystem (6) an oder in dem Säulenaufbau (2) geführt ist.

3. Klappsitzbank nach Anspruch 1 oder 2,
dadurch gekennzeichnet, daß
wenigstens eine Kopfstütze (7, 7') an dem Säulenaufbau (2) und/oder an dem Lehnenaufbau (3) angeordnet ist.

4. Klappsitzbank nach einem der Ansprüche 1 bis 3,
dadurch gekennzeichnet, daß
der Sitzflächenaufbau (4) mittels eines horizontal ausgerichteten Schwenkgelenkes (34) klappbar an dem Lehnenaufbau (3) angeordnet ist.

5. Klappsitzbank nach einem der Ansprüche 1 bis 4,
dadurch gekennzeichnet, daß
der Säulenaufbau (2), der Lehnenaufbau (3) oder der Sitzflächenaufbau (4) aus einem Rahmen (2a, 3a, 4a) und einem Polsterteil (2b, 3b, 4b) besteht.

6. Klappsitzbank nach einem der Ansprüche 1 bis 5,
dadurch gekennzeichnet, daß
der zentrale Zugsäulenrahmen (2a) mit seitlichen Erweiterungselementen (2d, 2e, 19, 20) verbindbar ist.

7. Klappsitzbank nach Anspruch 5 oder 6,
dadurch gekennzeichnet, daß
die Polsterteile (2b, 3b, 4b) steckbar mit den zugeordneten Rahmen (2a, 3a, 4a) verbunden sind.

8. Klappsitzbank nach einem der Ansprüche 1 bis 7,
dadurch gekennzeichnet, daß
der Lehnenrahmen (3a) und/oder der Sitzflächenrahmen (4a) mit einer netzartigen Auskleidung (8) oder mit Diagonalstreben (9) ausgekleidet ist.

9. Klappsitzbank nach einem der Ansprüche 1 bis 8,
dadurch gekennzeichnet, daß
der Gestellaufbau (2, 3, 4) in dem Grundgestell (1) verrastbar abgestützt ist.

10. Klappsitzbank nach einem der Ansprüche 1 bis 9,
dadurch gekennzeichnet, daß
der Gestellaufbau (2, 3, 4) entlang des Schwenkgelenkes (12) relativ zum Grundgestell (1) verschiebbar ist.

11. Klappsitzbank nach einem der Ansprüche 1 bis 10,
dadurch gekennzeichnet, daß
das Grundgestell (1) wenigstens eine Abstützeinrichtung (10) zur Abstützung des Gestellaufbaus (2, 3, 4) in dessen liegender Position (2'', 3'', 4'') aufweist.

## Claims

1. Folding bench seat for vehicles, particularly for caravans, comprising a seat frame which comprises a base frame (1) attached to the floor area and a top structure (2, 3, 4), the top structure (2, 3, 4) having an upright column unit (2), a back unit (3) and a seat unit (4), wherein the column unit (2) is mounted by means of a horizontally aligned lower pivot joint (12) to the base frame (1), and is so disposed as to be foldable from the upright position (2') into a reclining position (2''),
characterized in that
the back unit (3) is located foldably on the column unit (2) by means of a horizontally-aligned upper pivot joint (23) and in that there is located on the column unit (2) an upper turning or articulation point (5) for a three-point restraint system (6).

2. Folding bench seat according to claim 1, characterized in that the restraint system (6) is guided on or in the column unit (2).

3. Folding bench seat according to claim 1 or claim 2, characterized in that at least one head restraint (7, 7') is disposed on the column unit (2) and/or the back unit (3).

4. Folding bench seat according to any of claims 1 to 3, characterized in that the seat unit (4) is disposed foldably on the back unit (3) by means of a horizontally-aligned pivot joint (34).

5. Folding bench seat according to any of claims 1 to 4, characterized in that the column unit (2), the back unit (3), or the seat unit (4) comprises a frame (2a, 3a, 4a) and an upholstered portion (2b, 3b, 4b).

6. Folding bench seat according to any of claims 1 to 5, characterized in that the central tension column frame (2a) may be connected to lateral extension members (2d, 2e, 19, 20).

7. Folding bench seat according to claim 5 or claim 6, characterized in that the upholstered portions (2b, 3b, 4b) are connected in a plug-in manner to the associated frames (2a, 3a, 4a).

8. Folding bench seat according to any of claims 1 to 7, characterized in that the back frame (3a) and/or the seat frame (4a) are provided with a netlike coating (8) or covered by diagonal struts (9).

9. Folding bench seat according to any of claims 1 to 8, characterized in that the top structure (2, 3, 4) is supported in the base frame (1) in an engageable manner.

10. Folding bench seat according to any of claims 1 to 9, characterized in that the top structure (2, 3, 4) is displaceable along the pivot joint (12) relative to the base frame (1).

11. Folding bench seat according to any of claims 1 to 10, characterized in that the base frame (1) has at least one support device (10) for supporting the top structure (2, 3, 4) in its reclining position (2'', 3'', 4'').

## Revendications

1. Banquette rabattable pour véhicules, en particulier pour camping-cars, constituée d'une carcasse de banquette qui comprend un piétement (1) fixé au plancher et une partie de carcasse supérieure (2, 3, 4), laquelle partie supérieure (2, 3, 4) présente une structure sensiblement verticale de colonne (2), une structure de dossier (3) et une structure de surface d'assise (4), la structure de colonne (2) étant montée sur le piétement (1) par une articulation inférieure de basculement (12), orientée horizontalement, et pouvant être rabattue de la position sensiblement verticale (2') à une position couchée (2''), caractérisée en ce que
la structure de dossier (3) est montée relevable par une articulation supérieure de basculement (23), orientée horizontalement, sur la structure de colonne (2), et un point supérieur de renvoi ou d'attache (5) d'un système de retenue (6) à trois points est disposé sur la structure de colonne (2).

2. Banquette rabattable selon la revendication 1, caractérisée en ce que le système de retenue (6) est guidé sur ou dans la structure de colonne (2).

3. Banquette rabattable selon la revendication 1 ou 2, caractérisée en ce qu'au moins un appui-tête (7, 7') est disposé sur la structure de colonne (2) et/ou la structure de dossier (3).

4. Banquette rabattable selon une des revendications 1 à 3, caractérisée en ce que la structure de surface d'assise (4) est montée rabattable par une articulation de basculement (34), orientée horizontalement, sur la structure de dossier (3).

5. Banquette rabattable selon une des revendications 1 à 4, caractérisée en ce que la structure de colonne (2), la structure de dossier (3) ou la structure de surface d'assise (4) est composée d'un châssis (2a, 3a, 4a) et d'une partie coussin (2b, 3b, 4b).

6. Banquette rabattable selon une des revendications 1 à 5, caractérisée en ce que le châssis de colonne centrale (2a), formant une membrure tendue, peut être relié à des éléments latéraux d'extension (2d, 2e, 19, 20).

7. Banquette rabattable selon la revendication 5 ou 6, caractérisée en ce que les parties coussins (2b, 3b, 4b) sont reliées aux châssis (2a, 3a, 4a) coordonnés par enfichage.

8. Banquette rabattable selon une des revendications 1 à 7, caractérisée en ce que le châssis de dossier (3a) et/ou le châssis de surface d'assise (4a) est garni d'un garnissage grillagé (8) ou d'entretoises diagonales (9).

9. Banquette rabattable selon une des revendications 1 à 8, caractérisée en ce que la partie de carcasse supérieure (2, 3, 4) est appuyée de façon verrouillable dans le piétement (1).

10. Banquette rabattable selon une des revendications 1 à 9, caractérisée en ce que la partie de carcasse supérieure (2, 3, 4) est montée coulissante le long de l'articulation de basculement (12) par rapport au piétement (1).

11. Banquette rabattable selon une des revendications 1 à 10, caractérisée en ce que le piétement (1) présente au moins un dispositif d'appui (10) pour soutenir la partie de carcasse supérieure (2, 3, 4) dans sa position couchée ou étendue (2'', 3'', 4'').
